# EUROPÄISCHE PATENTSCHRIFT

(11) **EP 3 557 174 B1**
(45) Veröffentlichungstag und Bekanntmachung des Hinweises auf die Patenterteilung: **06.12.2023**
(21) Anmeldenummer: 19169387.8
(22) Anmeldetag: 16.04.2019
(51) Int. Cl.: F28D 20/00, F25B 17/08

(54) **ADSORPTIONSWÄRMEPUMPE ODER- KÄLTEMASCHINE UND VERFAHREN ZU IHREM BETRIEB**
ADSORPTION HEAT PUMP OR REFRIGERATION MACHINE AND METHOD FOR OPERATING THE SAME
POMPE À CHALEUR OU MACHINE DE RÉFRIGÉRATION À ADSORPTION ET SON PROCÉDÉ DE FONCTIONNEMENT

(30) Priorität: 20.04.2018 DE 102018109575
(43) Veröffentlichungstag der Anmeldung: 23.10.2019
(73) Patentinhaber: Karlsruher Institut für Technologie, 76131 Karlsruhe (DE)
(72) Erfinder: SCHMIDT, Ferdinand, 76135 Karlsruhe (DE); DESAI, Aditya, 76137 Karlsruhe (DE)
(74) Vertreter: Fitzner, Uwe

(56) Entgegenhaltungen:
- DE-A1- 19 542 076
- DE-A1-102012 024 073
- DE-A1-102014 113 450
- DE-U1- 8 525 680

## Beschreibung

Die vorliegende Erfindung betrifft eine Vorrichtung zur Bereitstellung von Wärme oder Kälte und ist ein Verfahren zur Bereitstellung von Wärme oder Kälte mittels Adsorption.

Die Bereitstellung von Wärme oder Kälte mittels Absorption ist aus dem Stand der Technik schon seit langem bekannt. Wärmepumpenzyklen mit erhöhtem Temperaturhub bzw. verringerter Antriebstemperatur sind v.a. aus dem Bereich der Absorptionsverfahren seit Jahrzehnten bekannt (Buch: Herold, Radermacher, Klein: Absorption Chillers and Heat Pumps, CRC Press), Kältemaschinen mit solchen Zyklen sind kommerziell erhältlich (Single-effectldouble lift Zyklus SE/DL) zur Nutzung von Abwärme mit geringem Temperaturniveau.

Adsorptionszyklen mit ähnlichen Eigenschaften (hoher Temperaturhub zwischen Mitteltemperatursenke und Niedertemperaturquelle sowie geringer Temperaturschub zwischen Antriebswärmequelle und Mitteltemperatursenkte) sind ebenfalls bekannt, z.B. Hamamoto et al., Int. J. Ref. 28 (2005) 344-352. Der dort beschriebene Adsorptionszyklus basiert auch auf einem sogenannten "double lift", d.h. der insgesamt benötigte Temperaturhub zwischen Verdampfer- und Kondensatortemperatur wird auf zwei Stufen des Prozesses aufgeteilt. Realisiert wird der Zyklus durch eine Anlage mit vier Adsorbern, einem Verdampfer und einem Kondensator. Eine ähnliche Konfiguration wird untersucht von Saha et al., Int. J. of Refrigeration 26 (2003), 749-757 sowie Saha et al., Renewable Energy 31 (2006) 2076-2090. Hier kommen insgesamt sechs Adsorber zum Einsatz, die entweder in einem sogenannten "Triple Lift"-Zyklus oder (bei höherer Antriebstemperatur) in einem konventionellen einstufigen Zyklus betrieben werden können.

Eine Adsorptionswärmepumpe mit Schichtspeicher ist aus der WO 2008034561 A bekannt. In dieser Vorrichtung ist jedoch nur der Adsorber mit dem Schichtspeicher hydraulisch verbunden bzw. über Ventile mit verschiedenen Höhen im Speicher verbindbar. Eine adsorptive Wärmetransformationsanordnung mit mindestens zwei Adsorbern und einem Wärmespeicher, der über mehrere Zuführleitungen mit dem Adsorptionsmodul verbunden ist, wird in der DE 10 2014 113 450 A offenbart. Die DE 199 08 666 A1 beschreibt ferner eine Adsorptionswärmepumpe-Kältemaschine mit zwei in Reihe geschalteten Adsorbern und einem Wärmespeicher, der jedoch nur mit dem Verdampfer-/Kondensatorkreislauf direkt fluidisch verbunden ist und nicht mit dem Adsorberkreislauf. DE 10 2014 113 450 A1 offenbart eine Vorrichtung gemäß dem Oberbegriff des Anspruchs 1.

Die DE 10 2011 102 036 A beschreibt ein Verfahren und eine Vorrichtung zum Betreiben einer zyklisch arbeitenden thermischen Adsorptionswärmeanlage mit einem Adsorber, die sich durch eine Wärmerückgewinnung über einen Zwischenspeicher auszeichnet. Dieser Zwischenspeicher kann jedoch kein Schichtwärmespeicher sein, da sich die Temperaturen zwischen seinen beiden Anschlüssen periodisch umkehren. Zudem ist der Zwischenspeicher zwar über Rohrleitungen sowohl mit dem Verdampfer-/Kondensator- als auch mit dem Adsorberkreislauf verbunden, jedoch würde eine (theoretisch mögliche) Fluidzirkulation zwischen Adsorber und Zwischenspeicher hier dazu führen, dass die Verdampfer-/Kondensatoreinheit nicht mit Fluid durchströmt werden kann, ohne dass sich das Fluid in den beiden Kreisläufen vermischt und sich eine Mischungstemperatur einstellt. Die Realisierung von Adsorptionszyklen mit erhöhtem Temperaturhub (Double Lift) oder Mehrstufigkeit (Double Effect) wird nicht beschrieben und ist mit dieser Vorrichtung auch nicht möglich.

Für die im Stand der Technik beschriebenen Adsorptionszyklen ist ein hoher technischer Aufwand notwendig. Teilweise sind mehrere Adsorptionskammern notwendig, sowie auch mehrere Verdampfer und Kondensatoren in unterschiedlichen Kammern. Für die Verbindung dieser Einheiten sind insbesondere dampfseitig Ventile notwendig. Für Wasser als Arbeitsmittel ist die Dichte des Dampfes sehr gering. Deshalb müssen diese Ventile als Vakuum-Ventile geeignet sein und einen großen Strömungsquerschnitt aufweisen. Mithin sind solche Ventile und die entsprechenden Einheiten, in denen sie verwendet werden, teuer und schwer. Die durch diese Ventile eingebrachten thermischen Massen werden mitzykliert und verringern dadurch die Effizienz des Zyklus bzw. der gesamten Vorrichtung.

Aufgabe der vorliegenden Erfindung war es, die Nachteile des Standes der Technik zu beseitigen. Insbesondere sollte eine Vorrichtung zur Bereitstellung von Wärme oder Kälte zur Verfügung gestellt werden mit einer höheren Effizienz als im Stand der Technik beschrieben. Außerdem soll eine Vorrichtung mit weniger Bestandteilen, bzw. weniger aufwändigen Bestandteilen zur Verfügung gestellt werden. Es sollte ferner eine Vorrichtung zur Verfügung gestellt werden, die mit nur einem Adsorber die nötige Effizienz liefert. Des Weiteren sollte die Vorrichtung eine hohe Effizienz erreichen mit einem einfachen Adsorptionsmodul, das keine getrennten Wärmeübertrager für Verdampfer und Kondensator aufweist. Insbesondere sollten im Adsorptionsmodul keine Dampfventile notwendig sein und die gesamte Vorrichtung einfach aufgebaut und kostengünstig herstellbar sein.

Des Weiteren sollte eine Vorrichtung zur Verfügung gestellt werden, die einen sog. "Double-Lift"-Adsorptionszyklus mit nur einem Adsorber ermöglicht; d.h. mit dem ein Wärmepumpeneffekt (Kreisprozess) erreicht wird unter Betriebsbedingungen, bei denen mit einem Standard-Adsorptionszyklus (zwei Isobaren, zwei Isosteren) kein ausreichender Beladungsumsatz oder lediglich ein Umsatz von ca. 10 % der Kapazität des Sorptionsmaterials erreicht werden kann.

Eine zusätzliche Aufgabe war es, eine Vorrichtung zur Verfügung zu stellen, die so betrieben werden kann, dass bei niedrigem gefordertem Temperaturhub ein sog. "Double-Effect"-Zyklus realisiert werden kann, in dem Kondensationswärme teilweise für die Desorption verwendet wird und dadurch die Effizienz gegenüber dem Standard-Adsorptionszyklus gesteigert wird. Somit sollten abhängig von den aktuell anliegenden Temperaturniveaus mit demselben Systemaufbau unterschiedliche Zyklen realisiert werden können, die jeweils eine hohe Effizienz aufweisen (absolut oder zumindest im Sinne des Carnot-Gütegrades, d.h. relativ zur Effizienz des reversiblen Vergleichsprozesses zwischen denselben drei Temperaturniveaus).

Für den Double-Lift Zyklus sollte ein Carnot-Gütegrad (bezogen auf den Kühlfall) von mindestens 0,3 in erreicht werden, für den Double-Effect eine Arbeitszahl im Kühlfall (COPₖ) von mindestens 0,8, sofern der Carnot-Gütegrad hier kleiner als 0,3 wäre.

Außerdem war es Aufgabe, die entsprechenden oben beschriebenen Verfahren bereitzustellen.

Gelöst wird die Aufgabe durch eine Vorrichtung gemäß Anspruch 1. Eine solche Vorrichtung weist folgende Komponenten auf:
- Adsorptionsmodul aufweisend mindestens einen Adsorber mit mindestens einem Adsorbens und mindestens einen weiteren Wärmeübertrager und mindestens ein Arbeitsmittel;
- mindestens ein Schichtwärmespeicher;
- mindestens eine Antriebswärmequelle; und
- mindestens ein Wärmeträgerfluid
dadurch gekennzeichnet, dass
sowohl der Adsorber als auch der Wärmeübertrager eine verschließbare fluidische Verbindung für das Wärmeträgerfluid zum Wärmespeicher aufweisen, wobei das in der Verbindung vorliegende Wärmeträgerfluid eine Zirkulation zwischen Wärmeübertrager und Wärmespeicher aufweist.

Eine Zirkulation ist Fluidfluss in eine vorgegebene Richtung, wobei sich aufgrund der Kontinuitätsbedingung (Massenerhaltung des Fluids) eine geschlossene Bahnkurve der Strömung des Fluids durch bestimmte Komponenten der Vorrichtung ergibt. Für die erfindungsgemäße Verwendung des Begriffs "Zirkulation" ist es unerheblich, ob die Strömung durch eine Pumpe hervorgerufen wird (erzwungene Konvektion) oder durch temperaturbedingte Dichteunterschiede unter Schwerkrafteinfluss zustande kommt (natürliche Konvektion, Thermosiphon) oder ob Ursache der Zirkulation Temperaturunterschiede sind, die zu einer Zweiphasenströmung führen wie im Wärmerohr (Heatpipe).

Ein Kreislauf wird definiert als eine fluidische Verbindung mit darin vorliegender Zirkulation eines Wärmeträgerfluids.

Mithin liegt in der Kondensationsphase eine Zirkulation des Wärmeträgerfluids zwischen Wärmetauscher, der in dieser Phase ein Kondensator ist, und Wärmespeicher vor; bevorzugt wird diese Zirkulation mittels einer Pumpe erreicht. Alternativ ist auch ein Zweiphasen-Wärmetransport in einem Wärmerohr (Heatpipe) ohne Pumpe möglich.

Die Vorrichtung enthält sowohl im Kondensator- und/oder Verdampferkreislauf als auch im Adsorberkreislauf je eine offene, aber verschließbare Verbindung zwischen Wärmeübertrager und Wärmespeicher. Mit anderen Worten, es muss sowohl eine fluidische Verbindung Adsorber-Speicher als auch Kondensatorkreis-Speicher vorhanden sein. Die beiden Verbindungen müssen gleichzeitig nutzbar sein, ohne dass es zu einer Angleichung der Temperaturniveaus zwischen Adsorber- und Kondensator-/Verdampferkreislauf (z.B. durch Fluidvermischung) kommt.

Eine fluidische Verbindung im Sinne der Erfindung ist ein fluiddichtes Element wie zum Beispiel Rohr, Schlauch, Kanal oder Kombinationen davon und Ähnliches, das von einem Fluid durchströmbar ist und den Transport eines Fluids von einem Ort zu einem anderen, bevorzugt innerhalb der erfindungsgemäßen Vorrichtung ermöglicht. In einer Alternative ist die fluidische Verbindung fluid- und/oder druckdicht.

Eine solche Verbindung kann weitere fluiddichte Elemente aufweisen beziehungsweise enthalten, die von dem Fluid durchströmbar sind wie zum Beispiel Pumpe, Bauteil zur Absperrung oder Regelung des Durchflusses von Fluiden, bevorzugt Ventil, Heizung/Wärmequelle.

Eine Wärmequelle ist im Sinne der Erfindung ein Wärmeübertrager, durch den ein Fluid strömt und dabei eine Enthalpieerhöhung (in Form einer Temperaturerhöhung und/oder eines Phasenwechsels) erfährt.

Im Sinne der Erfindung ist unter Komponente eine Vorrichtung, Bestandteil, Element eines Ganzen, Modul, Einheit, Bauteil, Zubehör, Gerät oder Apparatur zu verstehen, aber auch Mittel oder Fluid.

Modul bedeutet im Sinne der Erfindung ein austauschbares Element innerhalb eines Gesamtsystems einer Vorrichtung oder einer Maschine, das eine geschlossene Funktionseinheit bildet.

Unter einem Adsorptionsmodul wird im Sinne der Erfindung eine das Arbeitsmittel (in mindestens einer Kammer) druck- und/oder vakuumdicht umschließende Einheit verstanden, die mindestens einen Adsorber und mindestens einen als Verdampfer und/oder Kondensator für das Arbeitsmittel fungierenden Wärmeübertrager enthält. Das Arbeitsmittel (Sorptionsmittel) wird zwischen dem mindestens einen Adsorber und mindestens einen Wärmeübertrager periodisch ausgetauscht, allerdings lediglich an deren Außenseite. In den Wärmeübertragern, wie der Adsorber auch einer ist, fließt das Wärmeträgerfluid.

Im Fall von Niederdruck-Arbeitsmitteln wie Wasser oder Methanol wird eine vakuumdichte Hülle eingesetzt.

Im Stand der Technik werden verschiedene Arten von Adsorptionsmodulen beschrieben, die erfindungsgemäß hier eingesetzt werden können, zum Beispiel ein Modultyp, bei dem es nur einen Wärmeübertrager gibt, der sowohl als Verdampfer als auch als Kondensator fungiert, als auch ein Modultyp, bei dem Verdampfer und Kondensator getrennte Wärmeübertrager sind und es zusätzlich Dampfventile und eine Kondensatrückführung gibt.

In einer Ausführung der Vorrichtung weisen Adsorber und Wärmeübertrager eine gemeinsame Vakuumhülle auf.

Das Adsorptionsmodul ist abgeschlossen durch eine Vakuum-Hülle.

Erfindungsgemäß weist die Vorrichtung genau einen Adsorber auf.

Eine weitere Ausführung betrifft eine Vorrichtung, wobei der Wärmeübertrager ein Kondensator- und Verdampfer-Wärmeübertrager ist.

In einer Alternative liegen zwei Wärmeübertrager vor, ein Kondensator-Wärmeübertrager und ein Verdampfer- Wärmeübertrager.

Die erfindungsgemäße Vorrichtung weist zwei räumlich getrennte, fluidische Kreisläufe auf, einen Kreislauf des Arbeitsmittels im Adsorptionsmodul und mindestens einen des Wärmeträgerfluids.

Für die Variante mit getrenntem Verdampfer und Kondensator und insbesondere für Methanol oder Ammoniak als Arbeitsmittel ist es vorteilhaft, verschiedene Wärmeträgerfluide im Verdampfer- und im Speicherkreislauf verwenden zu können (z.B. ein Wasser-Glykol-Gemisch im Verdampferkreislauf und reines Wasser im Speicherkreislauf).

Im Sinne der Erfindung bedeutet räumlich getrennt, dass die Fluide keinen fluiden Kontakt miteinander haben, mithin das Wärmeträgerfluid und Arbeitsmittel sich nicht mischen können aufgrund der getrennten Kreisläufe.

Erfindungsgemäß wird der Begriff "Kreislauf" verwendet, um den Unterschied zu fluidischen Verbindungen zu verdeutlichen, die lediglich einen Hin- und/oder Rücklauf von Fluiden ermöglichen. In einem Kreislauf findet keine Strömungsumkehr über den gesamten Querschnitt der Leitung statt, d.h. die Strömungsrichtung des Fluids wird beibehalten, ggf. unterbrochen, aber nicht umgekehrt. In einer Alternative schließt ein Kreislauf eine Stromumkehr aus.

In einer Alternative weist der Kreislauf des Wärmeträgerfluids mindestens drei, bevorzugt genau vier untergeordnete Kreisläufe auf. Diese untergeordneten Kreisläufe werden als Heizerkreis, Adsorberkreis, beziehungsweise als Verdampfer-/ Kondensatorkreis bezeichnet und gegebenenfalls Wärmesenkenkreislauf. Diese drei beziehungsweise vier Kreisläufe weisen über Bauteile zur Absperrung oder Regelung des Durchflusses von Fluiden mindestens eine fluidische Verbindung untereinander auf. Diese untergeordneten drei beziehungsweise vier Kreisläufe weisen mithin mindestens eine für das Wärmeträgerfluid durchströmbare fluidische Verbindung auf.

Eine Ausführung der Erfindung ist eine Vorrichtung, die mindestens einen Adsorberkreislauf aufweist, enthaltend eine fluidische Verbindung von Adsorber zu Wärmespeicher mit mindestens einer Pumpe und mindestens einem, bevorzugt zwei Bauteilen zur Absperrung oder Regelung des Durchflusses von Fluiden, bevorzugt Mehrwegeselektionsventilen.

In einer Alternative ist ein Bauteil zur Absperrung oder Regelung des Durchflusses von Fluiden ein Mehrwegeselektionsventil.

Unter einem Mehrwegeselektionsventil wird erfindungsgemäß ein x/(x-1) Wegeventil verstanden mit x größer 3, also ein Wegeventil, das mindestens vier Anschlüsse hat und mindestens drei Stellungen, wobei ein Anschluss in jeder Stellung offen ist und von den übrigen Anschlüssen in jeder Stellung nur einer offen ist.

In einer Ausführung weist die Vorrichtung mindestens einen Verdampfer-Kondensatorkreislauf auf, enthaltend das Adsorptionsmodul mit nur einen als Verdampfer und Kondensator fungierenden Wärmeübertrager und eine fluidische Verbindung von Wärmeübertrager zu Wärmespeicher mit mindestens einer Pumpe und mindestens einem, bevorzugt mindestens zwei Bauteilen zur Absperrung oder Regelung des Durchflusses von Fluiden, bevorzugt Mehrwegeselektionsventilen, wobei im Verdampfer-/Kondensatorkreislauf weiterhin eine über das Bauteil herstellbare fluidische Verbindung zu einer Niedertemperatur-Wärmequelle besteht, die für die Verdampfungsphase in diesen Fluidkreislauf geschaltet werden kann.

In einer Ausführung enthält die Vorrichtung ein Adsorptionsmodul mit zwei getrennten Wärmeübertragern als Verdampfer und Kondensator, der Verdampferkreislauf weist mindestens eine Pumpe und eine fluidische Verbindung zu einer Niedertemperatur-Wärmequelle auf und ist zusätzlich Wärme aus dem Wärmespeicher über eine öffenbare fluidische Verbindung oder über einen Wärmeübertrager in den Verdampferkreis einkoppelbar, und weiterhin besteht eine fluidische Verbindung zwischen dem Kondensatorkreislauf und dem Wärmespeicher, mittels derer Kondensationswärme in den Wärmespeicher eingebracht werden kann.

In einer Alternative wird das Adsorbens ausgewählt aus der Gruppe enthaltend oder bestehend aus mikroporösen Adsorbentien, d.h. mit Porenweite <2 nm, bevorzugt aus der Gruppe der Zeolithe, Aluminophosphate (AlPOs), Silico-Aluminophosphate (SAPOs), Silikagele, Aktivkohlen oder der metallorganischen Gerüstmaterialien (MOFs) oder dass das Adsorbens eine Mischung dieser Materialien enthält; weiterhin ist das Arbeitsmittel ausgewählt aus der Gruppe enthaltend oder bestehend aus Wasser, Ammoniak, Methanol, Ethanol.

Eine Ausführung der Erfindung betrifft eine Vorrichtung dadurch gekennzeichnet, dass sie mindestens einen Heizerkreislauf aufweist, enthaltend eine fluidische Verbindung von Antriebswärmequelle zu Wärmespeicher mit mindestens einer Pumpe und/oder mindestens einem Bauteil zur Absperrung oder Regelung des Durchflusses von Fluiden, bevorzugt Mehrwegeselektionsventil.

Eine Ausführung ist auf eine Vorrichtung gerichtet, die mindestens einen Wärmesenkenkreislauf aufweist, enthaltend eine fluidische Verbindung von Mitteltemperatur-Wärmesenke zu Wärmespeicher mit mindestens einer Pumpe und/oder mindestens einem Bauteil zur Absperrung oder Regelung des Durchflusses von Fluiden, bevorzugt Mehrwegeselektionsventil.

Die einzelnen mindestens drei oder vier untergeordneten Kreisläufe: Heizerkreis (mit Pumpe), Adsorberkreis (mit Pumpe), Verdampfer-/Kondensatorkreis (mit Pumpe) und Senkenkreis (mit Pumpe) sind unabhängig voneinander betreibbar.

In einer weiteren Ausführung weist der Schichtwärmespeicher mindestens 3 Schichten des Wärmeträgerfluids mit unterschiedlichen Temperaturen auf. Dieser weist in einer Alternative mindestens eine Schichtbeladelanze und/oder mindestens eine Entladevorrichtung in diskretenr Höhen des Wärmespeichers auf.

Der Schichtwärmespeicher weist in einer Alternative mindestens eine Entladevorrichtung mit höhenvariabler Entnahme und/oder eine Schichtbeladelanze auf.

In einer Alternative weist der Schichtwärmespeicher mindestens eine Entladevorrichtung mit mindestens 4, bevorzugt mindestens 6 diskreten Entnahmepositionen (-höhen) auf, die eine fluidische Verbindung zu mindestens zwei der Kreisläufe aufweist.

In einer weiteren Alternative hat der Schichtspeicher mindestens 5, 6, 7, 8, 9, 10, 11, 12, 13, 14, 15 oder mehr Entnahmehöhen, also Wärmeträgerfluid-Schichten.

Im Sinne der Erfindung bedeutet diskrete Höhe einen Temperaturunterschied zwischen zwei benachbarten Schichten von 2-20 Kelvin, bevorzugt 3-15 Kelvin, besonders bevorzugt 4-10 Kelvin. Z.B. bedeuten 6 Entladehöhen bei einer Temperaturspreizung über die Speicherhöhe von 50 K einen Abstand benachbarter Entnahmehöhen von 10 K.

Ein erfindungsgemäß einzusetzender Schichtspeicher wird zum Beispiel in der DE 102014113450 A1 beschrieben. Allgemein erfolgt die Einschichtung in den Wärmespeicher bspw. durch Schichtladelanzen mit vielen Öffnungen, die innerhalb des Wärmespeichers vertikal angeordnet sind. Aufgrund der auftretenden Dichte- und Druckunterschiede des Fluides unterschiedlicher Temperatur schichtet sich das Fluid, wenn es aus den Öffnungen tritt, nahezu selbst ein. Jedoch tritt bei hohen Strömungsgeschwindigkeiten eine Vermischung der benachbarten Schichten vermehrt auf, wodurch eher ein kontinuierlicher Temperaturübergang als eine Schicht erzeugt wird. In einer bevorzugten Weiterbildung der Erfindung kann der Wärmespeicher ein thermisch geschichteter Wärmespeicher sein, der einen oder mehrere Speicherbehälter für ein Wärmeträgerfluid aufweist, in dem die Vielzahl von Be- und Entladeeinrichtungen zur gleichzeitigen Einschichtung und/oder Entnahme eines Wärmeträgerfluids angeordnet sein können. Es können mit den Be- und Entladeeinrichtungen, wie schon beschrieben, zwei oder mehr Wärmeträgerfluidströme verschiedener Temperatur gleichzeitig in verschiedene Schichten eingespeichert oder entnommen werden. Bevorzugt können die einzelnen Be- und Entladeeinrichtungen des Wärmespeichers jeweils horizontal im Wärmespeicher liegen und dabei so übereinander angeordnet und ausgebildet sein, dass eine Richardsonzahl Ri der Fluideinströmung (mit dem Abstand benachbarter Entladeeinrichtungen in der Höhe als charakteristischer Länge) in einem Bereich von 100 bis 3000 erreicht werden kann. Die Be- und Entladeeinrichtungen sind in einer Alternative aus einem Rohr aufgebaut. Das Rohr kann aus Metall oder aus Kunststoff gefertigt sein, je nach Anwendungsbedarf. Das Rohr hat Öffnungen und ist umgeben von einem offenporösen (z.B. schwammartigen) Material. Die Poren haben jeweils eine Austrittsöffnung, deren Fläche zusammengenommen eine Austrittsfläche bildet, durch die das Wärmeträgerfluid entweichen kann. Durch die große Oberfläche und die offenporige Struktur dieser Be- und Entladeeinrichtung wird erreicht, dass auch bei großen Volumenströmen das Wärmeträgerfluid mit sehr geringen Strömungsgeschwindigkeiten in den Speicherbehälter eingebracht wird und somit eine gute Schichtung stattfindet. Insbesondere können Freistrahlen (Jets) vermieden werden, also lokalisierte Strömungen mit hohen Geschwindigkeiten und großen Geschwindigkeitsgradienten, die sonst zu einer großräumigen Vermischung und einer erheblichen Störung der thermischen Schichtung innerhalb des Speicherbehälters führen könnten.

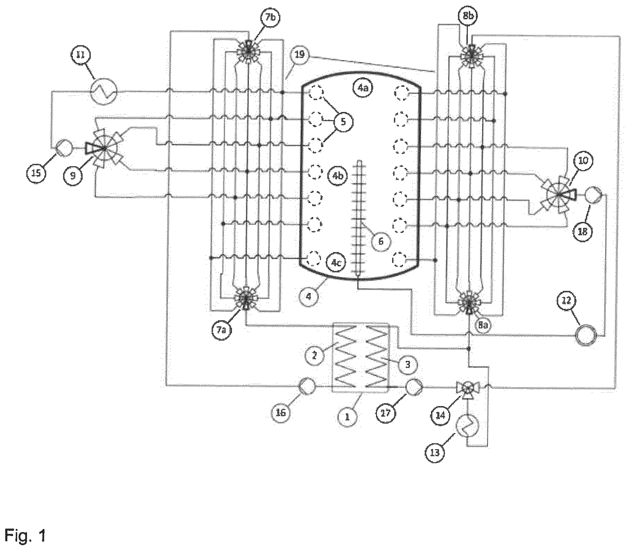

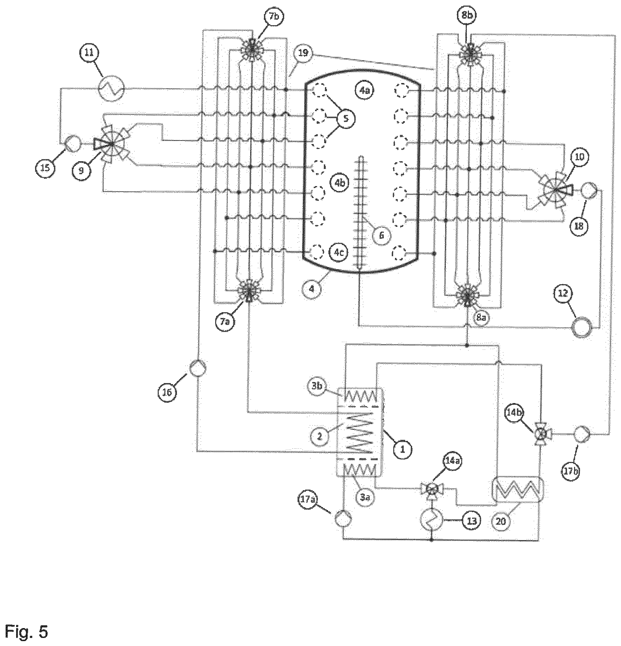

Im Folgenden wird unter Bezugnahme auf die Figuren die Erfindung näher erläutert:
Legende zu den Figuren:
- 1.: Adsorptionsmodul mit Vakuumhülle und zwei Wärmeübertragern
- 2.: Adsorber; Adsorptions-Wärmeübertrager
- 3.: Verdampfer / Kondensator-Wärmeübertrager (Ausführung als ein Wärmeübertrager, Fig. 1)
- 3a: Verdampfer (Ausführung Verdampfer und Kondensator als getrennte Wärmeübertrager, Fig. 5)
- 3b: Kondensator (Ausführung Verdampfer und Kondensator als getrennte Wärmeübertrager, Fig. 5)
- 4.: Wärmespeicher, bevorzugt Schichtwärmespeicher
- 4a: Oberer, im Betrieb wärmster Bereich des Wärmespeichers
- 4b: Mittlerer Bereich des Wärmespeichers
- 4c: Unterer, im Betrieb kältester Bereich des Wärmespeichers
- 5.: Entladeeinrichtungen in diskreten Höhen im Schichtspeicher Schichtwärmespeicher (Schichtspeicher)
- 6.: Beladelanze zur temperatur- bzw. dichteabhängigen Wiedereinschichtung von Fluid in den Schichtspeicher
- 7 7a:: Ventil (Mehrwege-Selektionsventil) zur Fluidentnahme aus dem Schichtspeicher für den Adsorber
- 7b:: Ventil (Mehrwege-Selektionsventil) zur Auswahl der Beladehöhe der Wiedereinschichtung des Fluids aus dem Adsorberkreis in den Schichtspeicher
- 8 8a:: Ventil (Mehrwege-Selektionsventil) zur Fluidentnahme aus dem Schichtspeicher für den Kondensator (Desorptionsphase) bzw. den Verdampfer (Adsorptionsphase)
- 8b:: Ventil (Mehrwege-Selektionsventil) zur Wiedereinschichtung von Fluid aus dem Kondensatorkreis in den Schichtspeicher
- 9.: Ventil (Mehrwege-Selektionsventil) zur Entnahme von Fluid aus dem Schichtspeicher für den Heizer
- 10.: Ventil (Mehrwege-Selektionsventil) zur Entnahme von Fluid aus dem Schichtspeicher für die Mitteltemperatur-Wärmesenke (z.B. Gebäudeheizung)
- 11.: Hochtemperatur-Wärmequelle: Liefert Antriebswärme für Zyklus, z.B. Gasbrenner, Solarkollektor. Im Folgenden allgemein "Heizer" genannt.
- 12.: Mitteltemperatur-Wärmesenke, z.B. Gebäudeheizkreis (im Wärmepumpenfall) oder Rückkühler (im Kältemaschinenfall)
- 13.: Niedertemperatur-Wärmequelle des Zyklus, z.B. Umweltwärmequelle im Wärmepumpenfall (Erdsonde, Außenluft, Gebäude-Abluft, Solarthermie,...); Nutzkälte im Kältemaschinenfall.
- 14.: Dreiwegeventil zur Umschaltung des Verdampfer-/Kondensatorkreises zwischen Niedertemperatur-Wärmequelle und Schichtspeicher (bei Ausführung mit gemeinsamem Verdampfer/Kondensator-Wärmeübergrager, Fig. 1)
- 14a: Dreiwegeventil zur Umschaltung des Verdampferkreises zwischen Niedertemperatur-Wärmequelle und Kopplungs-Wärmeübertrager zum Schichtspeicher (bei Ausführung von Verdampfer und Kondensator als getrennte Wärmeübertrager, Fig. 5)
- 14b: Dreiwegeventil zur Umschaltung des Kondensatorkreises zwischen Kondensator und Kopplungs-Wärmeübertrager zum Verdampfer (bei Ausführung von Verdampfer und Kondensator als getrennte Wärmeübertrager, Fig. 5)
- 15.: Pumpe im Heizerkreis
- 16.: Pumpe im Adsorberkreis
- 17.: Pumpe im Verdampfer-/Kondensatorkreis Schichtspeicher (bei Ausführung mit gemeinsamem Verdampfer/Kondensator-Wärmeübergrager, Fig. 1)
- 17a: Pumpe im Verdampferkreis (bei Ausführung von Verdampfer und Kondensator als getrennte Wärmeübertrager, Fig. 5)
- 17b: Pumpe im Kondensatorkreis (bei Ausführung von Verdampfer und Kondensator als getrennte Wärmeübertrager, Fig. 5)
- 18.: Pumpe im Kreis der Mitteltemperatur-Wärmesenke, z.B. Gebäudeheizkreis
- 19.: Leitungssystem zur Verbindung der einzelnen Ausgänge der Mehrwege-Selektionsventile mit den einzelnen Schichtlade-/-entladeeinrichtungen im Speicher
- 20.: Kopplungs-Wärmeübertrager zwischen Schichtspeicher und Verdampferkreis (bei Ausführung von Verdampfer und Kondensator als getrennte Wärmeübertrager, Fig. 5)
- P: Druck (in bar)
- T: Temperaturen (°C)

In einer Ausführung ist der Adsorber 2 mit dem Wärmespeicher 4 fluidisch verbunden (bzw. über Ventile mit verschiedenen Höhen im Speicher verbindbar), und zusätzlich ist auch der Kondensator 3 mit dem Wärmespeicher 4 fluidisch verbunden (bzw. über ein unabhängiges Ventilsystem wiederum mit verschiedenen Höhen im Speicher verbindbar).

In einer Alternative sind die zwischen Adsorber und Speicher und zwischen Kondensator und Speicher gebildeten Kreisläufe gleichzeitig betreibbar, ohne dass es zu einer nennenswerten Vermischung (und Temperaturangleichung) zwischen beiden Kreisläufen kommt.

Das Adsorptionsmodul 1 besteht in der einfachsten möglichen Ausführung nur aus einem Adsorber 2 und einem Verdampfer/Kondensator 3 in einer gemeinsamen Vakuumhülle. Der Adsorber 2 ist über eine Pumpe 16, zwei Mehrwege-Selektionsventile 7a, 7b und ein Rohrsystem 19 mit dem Wärmespeicher 4 fluidisch verbunden. Je nach Stellung von einem Ventil 7a wird Fluid aus einer bestimmten Höhe im Speicher 4 durch eine Schichtladeeinrichtung 5 entnommen und je nach Stellung von einem Ventil 7b nach dem Durchlaufen des Adsorbers 2 in eine andere Höhe des Speichers 4 wieder eingeschichtet.

Der Verdampfer/Kondensator 3 ist ebenfalls über eine Pumpe 17 und Mehrwege-Selektionsventile 8a, 8b mit dem Schichtspeicher 4 fluidisch verbunden, z.B. kann der Kondensator 3b eine verschließbare fluidische Verbindung zum Wärmespeicher aufweisen. Somit kann auch das dem Verdampfer/Kondensator 3 zugeführte Fluid in variabler Höhe aus dem Speicher 4 entnommen werden und in eine beliebige Höhe wiedereingeschichtet werden. Über ein Dreiwegeventil 14 kann statt des Wärmespeichers 4 eine Niedertemperatur-Wärmequelle 13 in den Verdampferkreis hydraulisch eingebunden werden.

Die Hochtemperatur-Wärmequelle (Antriebswärmequelle) 11 ist ebenfalls fluidisch an den Wärmespeicher 4 angekoppelt: Über ein Mehrwege-Selektionsventil 9 kann die Entnahmehöhe aus dem Speicher 4 gewählt werden, eine Pumpe 15 sorgt für den Volumenstrom durch die Wärmequelle 11 und die Wiedereinschichtung in die höchste Beladezone des Speichers 4.

Auch die Mitteltemperatur-Wärmesenke 12 ist fluidisch an den Speicher 4 angekoppelt: Hier dient ein Mehrwege-Selektionsventil 10 für die Fluidentnahme aus der gewünschten Höhe im Speicher 4, eine Pumpe 18 fördert das Fluid durch die Wärmesenke 12 über eine Schichtbeladelanze 6 zurück in den Speicher 4.

Zur Kombinierbarkeit der oben genannten alternativen Ausführungsvarianten für die Be- und Entladeeinrichtungen 5, 6 im Schichtwärmespeicher 4 kann ausgesagt werden, dass es immer dann, wenn eine höhenvariable Entladevorrichtung im Speicher ein Mehrwegeventil zur Fluidentnahme ersetzt 7a, 8a, 9 oder 10, sinnvoll ist, diese Entladevorrichtung nur für einen Kreislauf zu verwenden. Der Rücklauf des jeweiligen Kreislaufes in den Speicher erfolgt sinnvollerweise entweder über eine separate Schichtbeladelanze 6 oder über ein Mehrwegeselektionsventil wie 7b, 8b und fest im Speicher installierte Schichtbeladeeinrichtungen 5, die dann problemlos von mehreren Kreisläufen gemeinsam genutzt werden können.

Gegenstand der Erfindung ist auch ein Verfahren gemäß Anspruch 7 zur Bereitstellung von Wärme oder Kälte, mittels einer Vorrichtung wie oben beschrieben.

Der Standard-Adsorptionszyklus aus dem Stand der Technik ist gekennzeichnet durch vier Prozessschritte:
1. Isosteres Aufheizen des Adsorbers, bis Kondensatordruck erreicht wird
2. Isobare Desorption des Adsorbers und gleichzeitig Kondensation des Dampfes, bis Adsorber die maximale Desorptionstemperatur erreicht
3. isostere Abkühlung des Adsorbers, bis Verdampferdruck erreicht wird
4. Isobare Adsorption bei gleichzeitiger Verdampfung, bis Adsorber die minimale Adsorptionstemperatur erreicht.

Die im Stand der Technik beschriebenen Variationen dieses Prozesses betreffen überwiegend die Wärmerückgewinnung während der Prozessschritte 1 und 3.

### A: Erhöhter Temperaturhub (Double-Lift)

Ein gegenüber dem Standard-Adsorptionszyklus erhöhter Temperaturhub zwischen Niedertemperaturquelle und Mitteltemperatursenke wird erreicht, indem ein Zyklus durchlaufen wird, der in der Phase der Kühlung des Adsorbers eine Gabelung aufweist und in einem Teilzyklus Adsorptionswärme, die bei einer Temperatur unterhalb der Mitteltemperatur-Senke frei wird, im Wärmespeicher 4 zwischengespeichert wird und in dem anderen Teilzyklus mit dieser Wärme aus dem Wärmespeicher der Verdampfer beheizt wird, so dass eine näherungsweise isotherme Adsorption bei der Temperatur der Mitteltemperatursenke erreicht wird. Im unteren Bereich des Wärmespeichers 4 wird bei diesem Zyklus - im Gegensatz zur WO 2008034561 A - Wärme bei Temperaturen unterhalb der Temperatur der Mitteltemperaturwärmesenke gespeichert.

Um einen höheren Temperaturhub als mit dem Standardzyklus möglich zu erzielen, wird die Vorrichtung wie folgt betrieben beziehungsweise durchläuft die Vorrichtung folgende einzelne Schritte:

### A1. Isosteres Aufheizen:

Der Adsorber 2 wird mittels Fluid aus dem Wärmespeicher 4 schrittweise erwärmt. Der Wärmeübertrager 3, auch Verdampfer/Kondensator genannt, wird nicht durchströmt. Somit erfolgt das Aufheizen des Adsorbers im Wesentlichen isoster, es wird nur so viel Arbeitsmittel desorbiert, dass die Kondensationswärme gerade für die sensible Aufheizung des Kondensators bis zur Temperatur der Mitteltemperatur-Senke ausreicht.

Im Sinne der Erfindung bedeutet "im Wesentlichen", dass Abweichungen von dem idealen Verhalten auftreten können, insbesondere Abweichungen von 0-20%, bevorzugt 0-10%, besonders bevorzugt 0-5%, insbesondere 0-2% oder 0-1%. z.B. Abweichung von max. 20% des Beladungsumsatzes des gesamten Zyklus.

### A2. Isobare Desorption:

Der Adsorber 2 wird aus dem Speicherbereich 4a oder direkt über die Hochtemperatur-Wärmequelle 11 weiter erwärmt und Arbeitsmittel wird desorbiert. Der Kondensator 3 befindet sich auf dem Temperaturniveau der Mitteltemperatur-Wärmesenke 12, d.h. die Kondensationswärme ist direkt als Nutzwärme verwendbar und wird im Speicherbereich 4b zwischengespeichert. In einer Alternative der erfindungsgemäßen Vorrichtung erfolgt die Fluidentnahme für die Wärmesenke 12 in derselben Höhe des Speichers 4 wie die Einschichtung des Fluids aus dem Kondensator 3.

### A3. Isotherme Desorption:

Sobald die höchste verfügbare Desorptionstemperatur erreicht wird, ist eine weitere Desorption nur bei Absenkung der Kondensatortemperatur möglich. Der Kondensator 3 wird also schrittweise über den Schichtspeicher 4 abgekühlt. Die Kondensationswärme ist dann nicht mehr direkt nutzbar, sondern wird im Speicherbereich 4c zwischengespeichert (gepuffert).

### A4. Isosteres Abkühlen:

Der Zyklus wird bis zu einem vorgegebenen, minimalen Temperaturhub ausgefahren. Dieser kann zum Beispiel mit 10 K gewählt sein, entsprechend einer Kondensationstemperatur von 20°C bei einer Verdampfungstemperatur von 10°C. Sobald diese Kondensatortemperatur erreicht ist, wird der Kondensator 3 nicht weiter durchströmt, Pumpe 17 wird ausgeschaltet, und der Adsorber 2 wird aus dem Schichtspeicher 4 schrittweise abgekühlt. Diese Abkühlung erfolgt im Wesentlichen isoster, da nur so viel Fluid verdampft und adsorbiert wird, wie nötig ist, um den Kondensator 3 **sensibel** auf Verdampfertemperatur abzukühlen.

### A5. Adsorption mit Beheizung des Verdampfers 3 über externe Quelle 13:

Sobald der Gleichgewichtsdruck am Adsorber 2 den Sättigungsdampfdruck der externen Wärmequelle 13 unterschreitet, kann die Adsorption beginnen unter Aufnahme von Wärme aus der externen Niedertemperatur-Quelle 13 am Verdampfer 3. Über das Ventil 14 wird die Wärmequelle 13 in den Verdampferkreis geschaltet und die Pumpe 17 wieder eingeschaltet.

### A6. Gabelung in Teilzyklen:

Sobald die Adsorbertemperatur die Temperatur der Mitteltemperatur-Senke 12 erreicht, kann evtl, anfallende weitere Adsorptionswärme nicht mehr direkt genutzt werden.

### Hier gabelt sich der Zyklus:

A6a Weitere Adsorption / externe Quelle: Fortsetzung der Adsorption mit Pufferung der Adsorptionswärme im Speicherbereich 4c, so lange, bis entweder ein definierter minimaler Temperaturhub erreicht ist oder bis der Adsorber 2 weitgehend gesättigt ist und eine weitere Absenkung der Adsorbertemperatur zu keiner nennenswerten zusätzlichen Beladung führen würde.

A6b: Nach Durchlaufen des Pfades 6a erfolgt eine im Wesentlichen isostere Aufheizung des Adsorbers 2 über den Schichtspeicher 4, der Verdampfer/Kondensator 3 wird nicht weiter durchströmt. Dieser Prozessschritt geht in Schritt 1 über und schließt damit den (Teil-)Zyklus.

A6c Isotherme Adsorption: Alternativ zu Pfad A6a wird nach Schritt 5 auf eine isotherme Adsorption umgeschaltet: Die Adsorptionstemperatur wird auf dem Temperaturniveau der Mitteltemperatur-Senke 12 gehalten, indem die Verdampfertemperatur schrittweise erhöht wird. Dazu wird der Verdampfer 3 mit Fluid aus dem unteren Bereich 4c des Schichtspeichers 4 durchströmt durch Umschaltung von Ventil 14. Die in den Prozessschritten (A3) und (A6a) in diesem Bereich des Speichers 4c gepufferte Wärme wird nun also dem Verdampfer 3 zugeführt.

Dieser Schritt entspricht beim "Double Lift"-Zyklus dem, in dem der obere Teil des geforderten Temperaturhubs geleistet wird.

Die Teilpfade A6a und A6c können entweder abwechselnd durchlaufen werden oder durch Auswerten eines Kriteriums, in das die aktuell im unteren Speicherbereich 4c verfügbare Wärmemenge eingeht: Bei Vorliegen einer Mindest-Wärmemenge wird Pfad A6c durchlaufen, sonst A6a.

Falls das Wärmepumpensystem zusätzliche Funktionen erfüllt wie z.B. die Warmwasserbereitung für ein Gebäude, empfiehlt sich die Verwendung eines solchen Entscheidungskriteriums. Damit kann der Zyklus dem dynamischen Lastverhalten (der Wärmesenken) angepasst werden.

Insgesamt entspricht die Funktionsweise des dargestellten Zyklus einem "Double-Lift" Zyklus. In den Prozessschritten (A5) und (A6a) kann Wärme aus einer externen Niedertemperatur-Wärmequelle 13 aufgenommen werden, was mit einem Standardzyklus unter diesen Temperaturbedingungen nicht realisierbar wäre.

Der in diesem Ausführungsbeispiel beschriebene Zyklus ist kein stationärer - also eingeschwungener - Zyklus, da dem Wärmespeicher 4 in seinem unteren Bereich 4c mehr Wärme zugeführt wird als ihm entnommen wird. Insgesamt wird der untere Speicherbereich 4c bei Durchlaufen dieses Zyklus also erwärmt. Um einen stationären Zyklus zu erhalten, muss die Energiebilanz des Speichers im Temperaturbereich unterhalb der Mitteltemperatursenke geschlossen sein, d.h. dem Speicherbereich 4c muss bei der isothermen Adsorption A6c und ggf. dem isosteren Aufheizen A6b genauso viel Wärme entnommen werden, wie ihm im Gesamtzyklus während der isothermen Desorption A3 und ggf. der isobaren Adsorption A6a zugeführt wird.

### B Triple-Lift Zyklus:

Es wird ein Zyklus durchlaufen, der im Adsorptionspfad einen zusätzlichen Verzweigungspunkt aufweist in einen isobaren und einen isothermen Adsorptionsschritt.

Um einen Triple-Lift Effekt zu erzielen wird die Vorrichtung wie folgt betrieben beziehungsweise durchläuft die Vorrichtung folgende einzelne Schritte:
Der Zyklus wird in sehr ähnlicher Weise durchlaufen wie der oben beschriebene Double-Lift"-Zyklus. Gegenüber dem dort dargestellten Zyklus wird der Triple-Lift Zyklus bevorzugt eingesetzt, wenn eine geringe oder im Vergleich zum Double-Lift Zyklus geringere antriebsseitige Quellentemperatur vorliegt, also eine geringere Antriebstemperatur. Mit anderen Worten, die Hochtemperatur-Wärmequelle weist eine geringere Temperatur auf. Der Einsatz eines solchen Zyklus kann auch von dem verwendeten Adsorbens abhängen.

Dadurch liegt auf dem Adsorptionspfad B6c - analog A6c ein deutlich größerer Beladungsumsatz und der Verdampfer muss am Ende dieses Schrittes eine höhere Temperatur als beim Double-Lift Zyklus erreichen (Punkt 10 auf der Dampfdruckkurve).

Bei der Realisierung des Double-Lift-Zyklus (einfache Verzweigung zwischen A6a und A6c) kann nun der Fall auftreten, dass im Speicher zu wenig Wärme bei einer Temperatur knapp unterhalb der Mitteltemperatur-Senke zur Verfügung steht, aber viel Wärme im darunterliegenden Temperaturbereich. Dann funktioniert der Double-Lift-Zyklus nicht mehr gut, weil Schritt 6c nicht bis zum Ende durchlaufen werden kann, sondern die isotherme Adsorption bereits bei einer niedrigeren Beladung abgebrochen werden muss.

Eine mögliche Modifikation des Zyklus, die dieses Problem adressiert, liegt in dem Triple-Lift Zyklus: Entlang des Adsorptionspfades B6a wird ein zusätzlicher Verzweigungspunkt definiert: Wenn viel Wärme im unteren Temperaturbereich im Speicher vorliegt, wird der neue Adsorptionspfad B6e durchlaufen. Dazu wird wiederum der Verdampfer aus dem unteren Speicherbereich beheizt. Der Adsorber befindet sich nun aber auf einer Temperatur unterhalb der der Mitteltemperatur-Senke, und das aus dem Speicher zum Adsorber strömende Fluid wird auf einer niedrigeren Höhe aus dem Speicher entnommen als der Höhe, bei der das von der Mitteltemperatur- Senke in den Speicher strömende Fluid eingeschichtet wird. In Figur 1 erfolgt dies über die Beladelanze 6. Somit erwärmt sich der Speicher in diesem Bereich der Fluidentnahme zum Adsorber während des Adsorptionsprozesses und im Gegensatz zum Pfad B6c ist dieser neue Adsorptionspfad B6e nicht mehr isotherm (sondern er wird mit zunehmender Adsorbertemperatur durchlaufen). Der entlang dieses Pfades bewirkte Temperaturhub zwischen Verdampfung und Adsorption wirkt sich so aus, dass nun mehr Wärme knapp unterhalb der Temperatur der Mitteltemperatur-Senke im Speicher vorliegt und somit im nächsten Durchlauf des Zyklus der Pfad B6c bis zur Endbeladung durchlaufen werden kann.

Im Gesamteffekt wird somit ein Triple-Lift Zyklus realisiert.

### C Double-Effect Zyklus (Kühlanwendung)

Es wird ein Zyklus durchlaufen, der eine Gabelung enthält in der Phase der Beheizung des Adsorbers und eine Mehrstufigkeit dadurch erreicht, dass Kondensationswärme aus einem Teilzyklus im Wärmespeicher 4 zwischengespeichert wird und in einem anderen Teilzyklus zur Desorption verwendet wird.

Bei einem Verhältnis von benötigten Temperaturhub (T_mittel -T_niedrig) zu einem verfügbaren Temperaturschub (T_hoch -T_mittel) von 1:2,5 bis 1:10, bevorzugt 1:4 bis 1:10, wird mit wird mit der erfindungsgemäßen Vorrichtung ein Double-Effect-Zyklus realisiert.

Dabei erfolgt die Verzweigung bei Temperaturen oberhalb der der Mitteltemperatur-Senke.

Die Vorrichtung kann beispielsweise folgende einzelne Schritte durchlaufen:

### C1. Isosteres Aufheizen:

Der Adsorber wird mittels Fluid aus dem Wärmespeicher 4 schrittweise erwärmt. Der Verdampfer/Kondensator 3 wird nicht durchströmt. Dieses nahezu isostere Aufheizen erfolgt so lange, bis entweder die Temperatur der Hochtemperatur-Quelle 11 erreicht ist oder die maximal zulässige Kondensatortemperatur erreicht ist. (Für viele Adsorbentien werden bei hohen Kondensatortemperaturen Grenzen der hydrothermalen Stabilität erreicht, Punkt 9 auf der Dampfdruckkurve).

### C2. Isobare Desorption:

Der Adsorber 2 wird aus dem Speicher 3 oder direkt über die Hochtemperatur-Wärmequelle 11 weiter erwärmt und Arbeitsmittel wird desorbiert. Der Kondensator 3 befindet sich auf einem deutlich höheren Temperaturniveau als dem der Mitteltemperatur-Wärmesenke, d.h. die Kondensationswärme wird im Wärmespeicher 4 im oberen Bereich 4a gepuffert. Die Fluidentnahme für die Wärmesenke 12 erfolgt in einer niedrigeren Höhe des Speichers als die Einschichtung des Fluids aus dem Kondensator.

### C3. Isotherme Desorption:

Die höchste verfügbare Desorptionstemperatur ist erreicht, eine weitere Desorption ist nur bei Absenkung der Kondensatortemperatur möglich. Der Kondensator 3 wird also schrittweise über den Wärmespeicher 4 abgekühlt und die Kondensationswärme in den Bereichen 4a und 4b gepuffert, bis die Temperatur der Mitteltemperatur-Senke 12 erreicht ist (Kondensation dann bei Punkt 8 auf der Dampfdruckkurve).

### C4. Isosteres Abkühlen:

Der Adsorber 3 wird mittels Fluid aus dem Speicher 4 (nahezu, im Wesentlichen) isoster abgekühlt, bis der Sättigungsdampfdruck der Niedertemperatur-Quelle 13 unterschritten wird. Der Verdampfer/Kondensator 3 wird dabei nicht durchströmt.

### C5. Adsorption:

Unter Wärmeaufnahme aus der Niedertemperatur-Quelle 13 im Verdampfer 3 (Nutzkälteerzeugung, Punkt 7 auf Dampfdruckkurve) erfolgt in diesem Schritt die Adsorption. Der Adsorber 2 wird aus dem Wärmespeicher 4 schrittweise weiter abgekühlt, die Adsorptionswärme wird gepuffert. Die Adsorption endet, wenn der Adsorber 2 die Temperatur der Mitteltemperatur-Senke 12 (Rückkühlung) erreicht. An die Adsorption schließt sich das isostere Aufheizen (Schritt 1) an.

### C6. Gabelung in Teilzyklen:

Sobald beim isosteren Aufheizen in der Adsorberkammer der Sättigungsdampfdruck der Mitteltemperatur-Senke 12 erreicht wird, ist auch die Gabelung des Zyklus erreicht. Aus früheren Prozess-Schritten (C2) und (C3) liegt Kondensationswärme im Wärmespeicher 4 vor, die nun zur Desorption verwendet werden kann.

### C6a Isobare Desorption:

Bei minimaler Kondensatortemperatur (Punkt 8) wird der Adsorber 2 so weit desorbiert, wie mit Wärme aus dem Wärmespeicher 4 möglich, ohne Wärme aus der Hochtemperatur-Wärmequelle 11 zu verwenden. Diese Desorption kann bis zur Fluidentnahme aus dem Wärmespeicher 4 in Höhe der Fluidentnahme zum Heizer 11 erfolgen.

### C6b. Isosteres Abkühlen:

An die Zwischen-Desorption schließt sich eine isostere Abkühlung (ohne Durchströmung des Verdampfers/Kondensators 3) an. Der Zyklus geht dann wieder in den Adsorptionsschritt 5 über.

Der Teilzyklus zur Nutzung der Kondensationswärme entspricht also einem Standard-Adsorptionszyklus (zwei Isobaren, zwei Isosteren) mit verringertem Beladungsumsatz. Der Adsorptionsanteil von 5, der in diesem Teilzyklus durchlaufen wird, entspricht gerade dem "Double-Effect"-Anteil, da hier zusätzliche Verdampfungswärme aufgenommen wird (d.h. Nutzkälte erzeugt wird), der kein zusätzlicher Antriebswärmeaufwand bei der Desorption gegenübersteht.

Die beiden Teilzyklen können entweder abwechselnd durchlaufen werden oder auf Basis eines Entscheidungskriteriums, in das die im Speicher verfügbare Wärmemenge im Temperaturbereich zwischen der Mitteltemperatur-Senke 12 und der Entnahme zur Hochtemperatur-Quelle 11 eingeht. Durch so ein Kriterium kann der Zyklus sich dynamisch ändernden Lastbedingungen angepasst werden. Dies ist insbesondere dann von Vorteil, wenn der Wärmespeicher 4 eine zusätzliche Funktion erfüllt (z.B. als Brauchwarmwasser-Pufferspeicher).

Ein weiterer vom Standard-Adsorptionszyklus abweichender Zyklus kann vorteilhaft realisiert werden, wenn die Mitteltemperatur-Wärmesenke eine große Temperaturspreizung aufweist. Dies ist insbesondere bei der BrauchwarmwasserBereitung der Fall mit einer typischen Temperaturspreizung von etwa 40 Kelvin. Ein Zyklus mit isothermer Desorption ohne Gabelung weist hier einen Effizienzvorteil gegenüber dem Standardzyklus auf.

Die Vorrichtung kann zur Realisierung dieses Zyklus beispielsweise die oben beschriebenen Prozess-Schritte C1 bis C5 durchlaufen. Während der isothermen Desorption wird Kondensationswärme zunächst bei höherer Temperatur (nahe der Vorlauftemperatur der Wärmesenke), später bei niedrigerer Temperatur (nahe der Rücklauftemperatur der Wärmesenke) frei. Durch die Pufferung im Wärmespeicher 4 kann konstant Wärme der gewünschten Temperatur an die Senke abgegeben werden. Ein Standardzyklus müsste zur Bereitstellung derselben Nutzwärme an die Wärmesenke bei konstant hoher Kondensatortemperatur betrieben werden und würde infolgedessen einen geringeren Beladungsumsatz aufweisen.

Die erfindungsgemäße Vorrichtung und die erfindungsgemäßen Verfahren haben folgende Vorteile:
- konsequente Ausnutzung eines Schichtwärmespeichers zur zeitlichen Pufferung von Wärme auf allen für den Zyklus relevanten Temperaturniveaus;
- ein einziger Adsorber durchläuft einen komplexen Zyklus, der insbesondere im Temperaturbereich zwischen der Mitteltemperatursenke und der Niedertemperaturquelle verschiedene Pfade aufweist (im Fall des Double-Lift-Zyklus), bzw. im Temperaturbereich oberhalb der Mitteltemperatursenke unterschiedliche Pfade aufweist (im Fall des Double-Effect-Zyklus) und/oder der einen isothermen Desorptionsschritt mit Zwischenspeicherung der Kondensationswärme aufweist;
- Double-Lift-Zyklus mit nur einem Adsorber möglich;
- keine getrennten Wärmetauscher für Verdampfer und Kondensator notwendig;
- ein Wärmetauscher für beide Funktionen ist ausreichend;
- im Adsorptionsmodul wird überhaupt kein Dampfventil benötigt;
- die benötigten Mehrwegeventile für das Fluidmanagement im Adsorber- und Verdampfer- /Kondensatorkreis sind vergleichsweise einfach aufgebaut und kostengünstig herstellbar;
- die angegebene Konfiguration ermöglicht es mit dem einfachsten möglichen Adsorptionsmodul (ein Adsorber, ein Verdampfer/Kondensator in gemeinsamer Vakuumhülle) einen komplexen Zyklus zu realisieren, insbesondere einen Double-Lift Zyklus, mit dem Antriebswärme bereits auf einem Temperaturniveau genutzt werden kann, das für einen Standardzyklus nicht ausreichen würde;
- Flexibilität der Vorrichtung: bei verschiedenen anliegenden Temperaturbedingungen verschiedene Zyklen realisieren zu können. Somit kann je nach Betriebsbedingungen der effizienteste Zyklus ausgewählt werden. In anderen Systemen, die verschiedene Zyklen realisieren können, ist der Aufwand hierfür wesentlich größer (z.B. Saha et al., 2006).
- Ferner ist eine Kombination mit einer Warmwasserbereitung möglich. So ist eine Anwendung des Zyklus in Gaswärmepumpen bei hohen Heizkreistemperaturen und bei zusätzlicher Verwendung des Schichtspeichers als Pufferspeicher für die Brauchwarmwasserbereitung möglich.

### Beispiele:

### 1. Double-Lift: Das Verfahren wird wie oben beschrieben durchgeführt.

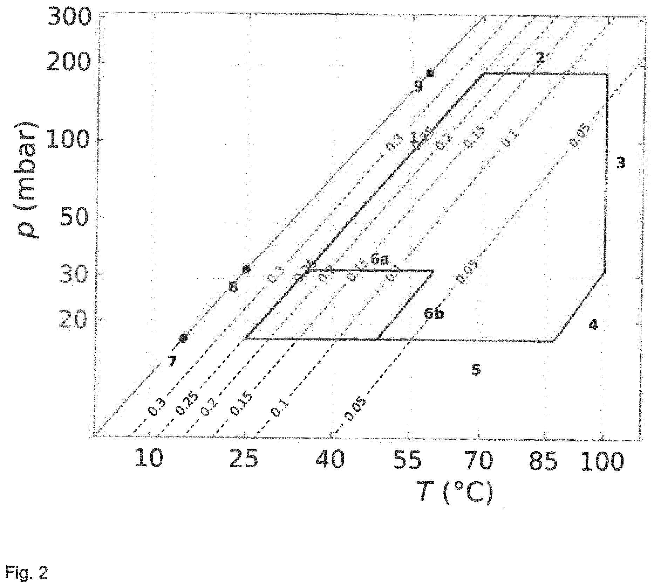

In Fig. 2 ist ein ist Isosterenfeld dargestellt für das Stoffpaar SAPO-34 / Wasser im Clapeyron-Diagramm (In p vs. -1/T), in dem sowohl die Dampfdruckkurve (linke gestrichelte Linie, auf der die Punkte 7, 8 und 9 liegen) als auch die Isosteren (gestrichelte Linien mit Beladungsangaben in Gramm Wasser pro Gramm Adsorbens am oberen Bildrand) näherungsweise Geraden sind.

Gegeben sei eine Heizanwendung mit einer Nutztemperatur von 50°C (Mitteltemperatur-Senke), einer Verdampfertemperatur von 10°C (Niedertemperatur-Quelle) und einer Antriebstemperatur von 90°C (Hochtemperatur-Quelle). Die Wärmepumpe muss also einen Temperaturhub (T_mittel - T_niedrig) leisten von 40 K bei einem verfügbaren Temperaturschub (T_hoch -T_mittel) von ebenfalls 40 K. Das Isosterenfeld gibt die Adsorptionsgleichgewichte des betrachteten Stoffpaares wieder. Daraus ist sofort ersichtlich, dass unter den hier angenommenen Temperaturbedingungen der Standard-Adsorptionszyklus (zwei Isobaren, zwei Isosteren) nicht realisiert werden kann, da er keinen Beladungsumsatz erreicht: Die Gleichgewichtsbeladung am Ende der Desorption (Rechtecksymbol hinter Pfeil 2) wäre höher als die Gleichgewichtsbeladung am Ende der Adsorption (Rechtecksymbol hinter Pfeil 5).

In das Diagramm eingezeichnet ist ein Zyklus, bei dem der benötigte Temperaturhub auf verschiedene Teilprozesse aufgeteilt wird (Double-Lift Zyklus), die jeweils einen eigenen Adsorptionsprozess enthalten.

In Schritt A4 wird ein minimaler Temperaturhub vorgegeben, bis zu dem der Zyklus ausgefahren wird. Dieser ist hier mit 10 K gewählt, entsprechend einer Kondensationstemperatur von 20°C (Punkt 8 auf der Dampfdruckkurve). Ferner wird angenommen, dass die Adsorption in Schritt A6a bei einer Adsorbertemperatur von 30°C abgebrochen wird (Sättigung des Adsorbers).

Insgesamt entspricht die Funktionsweise des hier dargestellten Zyklus einem Double-Lift Zyklus. In den Prozessschritten 5 und 6a kann Wärme aus einer externen Niedertemperatur-Wärmequelle aufgenommen werden, was mit einem Standardzyklus unter diesen Temperaturbedingungen nicht realisierbar wäre.

### 2. Triple-Lift: Das Verfahren wird wie oben beschrieben durchgeführt.

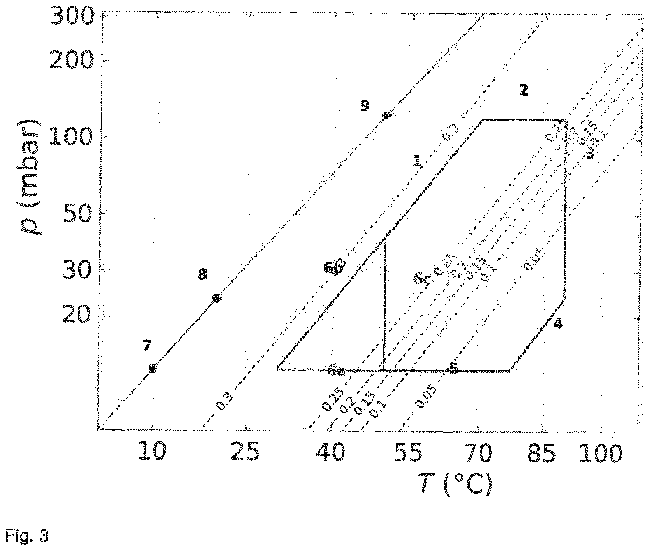

In Fig. 3 ist ein Isosterenfeld für das Stoffpaar Silikagel / Wasser im Clapeyron-Diagramm (In p vs. -1/T) dargestellt.

Gegeben sei eine Heizanwendung mit einer Nutztemperatur von 50°C (Mitteltemperatur-Senke), einer Verdampfertemperatur von 10°C (Niedertemperatur-Quelle) und einer Antriebstemperatur von 70°C (Hochtemperatur-Quelle). Die Wärmepumpe muss also einen Temperaturhub (T_mittel -T_niedrig) leisten von 40 K bei einem verfügbaren Temperaturschub (T_hoch - T _mittel) von nur 20 K.

Der Zyklus wird in sehr ähnlicher Weise durchlaufen wie der unter Fig. 2 beschriebene Double-Lift-Zyklus. Gegenüber dem dort dargestellten Zyklus liegt hier ein anderes Adsorbens (Silikagel statt SAPO-34) und eine geringere antriebsseitige Quellentemperatur vor.

Diese Unterschiede führen dazu, dass hier auf dem Adsorptionspfad 6c ein deutlich größerer Beladungsumsatz liegt und der Verdampfer am Ende dieses Schrittes eine Temperatur von etwa 40°C erreichen muss (Punkt 10 auf der Dampfdruckkurve). Bei der Realisierung des "Double Lift"-Zyklus (einfache Verzweigung zwischen 6a und 6c) mit dem System aus Abb. 1 kann nun der Fall auftreten, dass im Speicher zu wenig Wärme bei einer Temperatur knapp unterhalb der Mitteltemperatur-Senke zur Verfügung steht (hier: im Bereich 35°C bis 50°C), aber viel Wärme im darunterliegenden Temperaturbereich (hier: 20°C bis 35°C). Dann funktioniert der "Double Lift"-Zyklus nicht mehr gut, weil Schritt 6c nicht bis zum Ende durchlaufen werden kann, sondern die isotherme Adsorption bereits bei einer niedrigeren Beladung abgebrochen werden muss.

Im Gesamteffekt wird somit ein Triple-Lift-Zyklus realisiert.

### 3. Double-Effect: Das Verfahren wird wie oben beschrieben durchgeführt.

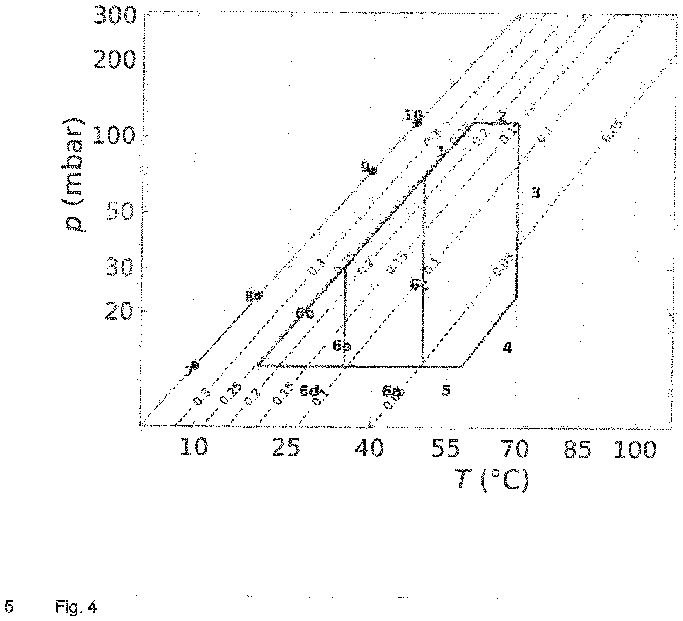

In Fig. 4 ist ein Isosterenfeld für das Stoffpaar Silikagel / Wasser im Clapeyron-Diagramm (In p vs. -1/T) dargestellt.

Gegeben sei eine Kühlanwendung mit einer Nutzkältetemperatur von 15°C (Niedertemperatur-Quelle), einer Rückkühltemperatur von 25°C (Mitteltemperatur-Senke), und einer Antriebstemperatur von 100°C (Hochtemperatur-Quelle). Beispielsweise kann es sich um eine sommerliche Gebäudekühlung mit einer Erdsonde als Wärmesenke handeln.

Der benötigte Temperaturhub (T_mittel -T_niedrig) beträgt also nur 10 K bei einem verfügbaren Temperaturschub (T_hoch -Tmittel) von 75 K.

Unter diesen Bedingungen kann mit dem System enstprechend Abb. 1 ein Double-Effect-Zyklus realisiert werden, wobei die Verzweigung hier bei Temperaturen oberhalb der der Mitteltemperatur-Senke erfolgt.

## Patentansprüche

1. Vorrichtung zur Bereitstellung von Wärme oder Kälte mittels Adsorption mit mindestens folgenden Komponenten:
- Adsorptionsmodul (1) aufweisend einen Adsorber (2) mit mindestens einem Adsorbens und mindestens einen weiteren Wärmeübertrager (3) und mindestens ein Arbeitsmittel;
- mindestens einen Schichtwärmespeicher (4);
- mindestens eine Antriebswärmequelle (11); und
- mindestens ein Wärmeträgerfluid, wobei sowohl der Adsorber (2) als auch der Wärmeübertrager (3) eine verschließbare fluidische Verbindung für das Wärmeträgerfluid zum Schichtwärmespeicher aufweisen, wobei das in der Verbindung vorliegende Wärmeträgerfluid eine Zirkulation zwischen Wärmeübertrager und Schichtwärmespeicher aufweist,
wobei die Vorrichtung mindestens einen Heizerkreislauf aufweist, enthaltend eine fluidische Verbindung von Antriebswärmequelle (11) zu Schichtwärmespeicher (4) mit mindestens einer Pumpe (15) und/oder mindestens einem Mehrwegeselektionsventil (9) zur Absperrung oder Regelung des Durchflusses von Fluiden, dessen auswählbare Anschlüsse mit verschiedenen Positionen/Höhen im Schichtwärmespeicher (4) fluidisch verbunden sind,
**dadurch gekennzeichnet, dass** sie mindestens einen Verdampfer-/ Kondensatorkreislauf aufweist, enthaltend das Adsorptionsmodul mit nur einem als Verdampfer und Kondensator fungierenden Wärmeübertrager (3) und enthaltend eine fluidische Verbindung von Wärmeübertrager (3) zu Schichtwärmespeicher (4) mit mindestens einer Pumpe (17) und mindestens einem (8a), bevorzugt mindestens zwei Mehrwegeselektionsventilen (8a und 8b) zur Absperrung oder Regelung des Durchflusses von Fluiden, wobei im Verdampfer-/Kondensatorkreislauf weiterhin eine über das Bauteil (14) herstellbare fluidische Verbindung zu einer Niedertemperatur-Wärmequelle (13) besteht,
wobei die Vorrichtung genau einen Adsorber aufweist, und wobei
die Vorrichtung mindestens einen Wärmesenkenkreislauf aufweist, enthaltend eine fluidische Verbindung von Mitteltemperatur-Wärmesenke (12) zu Schichtwärmespeicher (4) mit mindestens einer Pumpe (18) und/oder mindestens einem Mehrwegeselektionsventil (10) zur Absperrung oder Regelung des Durchflusses von Fluiden, dessen auswählbare Anschlüsse mit verschiedenen Höhen im Schichtwärmespeicher (4) fluidisch verbunden sind.

2. Vorrichtung nach Anspruch 1 **dadurch gekennzeichnet, dass** sie mindestens einen Adsorberkreislauf aufweist, enthaltend eine fluidische Verbindung von Adsorber (2) zu Schichtwärmespeicher (4) mit mindestens einer Pumpe (16) und mindestens einem (7a), bevorzugt zwei Mehrwegeselektionsventilen (7a und 7b)zur Absperrung oder Regelung des Durchflusses von Fluiden.

3. Vorrichtung nach einem der vorangehenden Ansprüche **dadurch gekennzeichnet, dass** das Adsorbens ausgewählt ist aus der Gruppe der mikroporösen Adsorbentien, bevorzugt aus der Gruppe der Zeolithe, Aluminophosphate (AlPOs), Silico-Aluminophosphate (SAPOs), Silikagele, Aktivkohlen oder der metallorganischen Gerüstmaterialien (MOFs) oder dass das Adsorbens eine Mischung dieser Materialien enthält; dass weiterhin das Arbeitsmittel ausgewählt ist aus der Gruppe enthaltend oder bestehend aus Wasser, Ammoniak, Methanol, Ethanol.

4. Vorrichtung nach einem der vorangehenden Ansprüche **dadurch gekennzeichnet, dass** der Schichtwärmespeicher (4) mindestens 3 Schichten des Wärmeträgerfluids mit unterschiedlichen Temperaturen aufweist.

5. Vorrichtung nach einem der vorangehenden Ansprüche **dadurch gekennzeichnet, dass** der Schichtwärmespeicher (4) mindestens eine Entladevorrichtung mit mindestens 4, bevorzugt mindestens 6 diskreten Entnahmepositionen (-höhen) aufweist, die eine fluidische Verbindung zu mindestens zwei der Kreisläufe aufweist.

6. Vorrichtung nach einem der vorangehenden Ansprüche **dadurch gekennzeichnet, dass** der Schichtwärmespeicher (4) mindestens eine Entladevorrichtung mit höhenvariabler Entnahme und/oder eine Schichtbeladelanze (6) aufweist.

7. Verfahren zur Bereitstellung von Wärme und/oder Kälte wobei man eine Vorrichtung nach einem der Ansprüche 1 - 6 zur Bereitstellung von Wärme oder Kälte benutzt.

8. Verfahren nach Anspruch 7 **dadurch gekennzeichnet, dass** ein im Vergleich zu einem einfachen Adsorptionszyklus aus zwei Isosteren und zwei Isobaren erhöhter Temperaturhub zwischen Niedertemperaturquelle und Mitteltemperatursenke erreicht wird, indem ein Zyklus durchlaufen wird, bei dem in mindestens einem Prozess-Schritt Adsorptionswärme und/oder Kondensationswärme, die bei einer Temperatur unterhalb der Mitteltemperatur-Senke frei wird, im Schichtwärmespeicher (4) zwischengespeichert wird und in mindestens einem Prozess-Schritt mit dieser Wärme aus dem Schichtwärmespeicher der Verdampfer beheizt wird.

9. Verfahren zur Bereitstellung von Wärme und/oder Kälte nach Anspruch 8, **dadurch gekennzeichnet, dass** ein Zyklus durchlaufen wird, der im Adsorptionspfad mindestens einen Verzweigungspunkt aufweist in einen isobaren und einen isothermen Adsorptionsschritt.

10. Verfahren nach Anspruch 8, **dadurch gekennzeichnet, dass** ein Zyklus durchlaufen wird, der eine Gabelung enthält in der Phase der Beheizung des Adsorbers und eine Mehrstufigkeit dadurch erreicht, dass Kondensationswärme aus einem Teilzyklus im Schichtwärmespeicher (4) zwischengespeichert wird und in einem anderen Teilzyklus zur Desorption verwendet wird.

## Claims

1. Device for providing heat or cold by means of adsorption, having at least the following components:
- adsorption module (1) comprising an adsorber (2) with at least one adsorbent and at least one further heat transfer device (3) and at least one working medium;
- at least one layered heat reservoir (4);
- at least one driving heat source (11); and
- at least one heat transfer fluid, wherein
both the adsorber (2) as well as the heat transfer device (3) have a closable fluidic connection for the heat transfer fluid to the layered heat reservoir, wherein the heat transfer fluid present in the connection has a circulation between the heat transfer device and the layered heat reservoir,
wherein the device has at least one heater circuit comprising a fluidic connection from the driving heat source (11) to the layered heat reservoir (4) with at least one pump (15) and/or at least one multi-way selection valve (9) for shutting off or regulating the flow of fluids, the selectable connections of which are fluidically connected to different positions/levels in the layered heat reservoir (4)
**characterised in that** it has at least one evaporator/condenser circuit, containing the adsorption module with only one heat transfer device (3) acting as evaporator and condenser and containing a fluidic connection from heat transfer device (3) to layered heat reservoir (4) with at least one pump (17) and at least one (8a), preferably at least two multi-way selection valves (8a and 8b) for shutting off or regulating the flow of fluids, wherein in the evaporator/condenser circuit there is furthermore a fluidic connection, which can be established via the component (14), to a low-temperature heat source (13),
wherein the device comprises exactly one adsorber, and wherein the device - has at least one heat sink circuit containing a fluidic connection from a medium-temperature heat sink (12) to layered heat reservoir (4) with at least one pump (18) and/or at least one multi-way selection valve (10) for shutting off or regulating the flow of fluids, the selectable connections of which are fluidically connected to different levels in the layered heat accumulator (4).

2. Device according to claim 1, **characterised in that** it has at least one adsorber circuit containing a fluidic connection from the adsorber (2) to the layered heat reservoir (4) with at least one pump (16) and at least one (7a), preferably two multi-way selection valves (7a and 7b) for shutting off or regulating the flow of fluids.

3. Device according to one of the preceding claims, **characterized in that** the adsorbent is selected from the group of microporous adsorbents, preferably from the group of zeolites, aluminophosphates (AIPOs), silicoaluminophosphates (SAPOs), silica gels, activated carbons or the metal-organic framework materials (MOFs) or **in that** the adsorbent contains a mixture of these materials; **in that** furthermore the working medium is selected from the group containing or consisting of water, ammonia, methanol, ethanol.

4. Device according to one of the preceding claims, **characterized in that** the layered heat reservoir (4) comprises at least 3 layers of the heat transfer fluid with different temperatures.

5. Device according to one of the preceding claims, **characterized in that** the layered heat reservoir (4) has at least one discharge device with at least 4, preferably at least 6 discrete discharge positions (levels), which has a fluidic connection to at least two of the circuits.

6. Device according to one of the preceding claims, **characterized in that** the layered heat reservoir (4) comprises at least one discharge device with level-variable withdrawal and/or a layer charging lance (6).

7. Process for providing heat and/or cold, wherein a device according to one of the claims 1 - 6 is used for providing heat or cold.

8. Process according to claim 7, **characterized in that** an increased temperature swing between the low-temperature source and the medium-temperature sink in comparison with a simple adsorption cycle comprising two isosters and two isobars is achieved by running through a cycle in which, in at least one process step, adsorption heat and/or condensation heat which is released at a temperature below the medium-temperature sink is temporarily stored in the layered heat reservoir (4) and, in at least one process step, the evaporator is heated with this heat from the layered heat reservoir.

9. Process for providing heat and/or cold according to claim 8, **characterised in that** a cycle is run through which has at least one branching point into an isobaric and an isothermal adsorption step in the adsorption path.

10. Process according to claim 8, **characterized in that** a cycle is run through which contains a junction in the phase of heating the adsorber and achieves a multistage by temporarily storing condensation heat from a partial cycle in the layered heat reservoir (4) and using it for desorption in another partial cycle.

## Revendications

1. Dispositif pour fournir de la chaleur ou du froid par adsorption, comprenant au moins les composants suivants :
- un module d'adsorption (1) présentant au moins un adsorbeur (2) avec au moins un adsorbant et au moins un autre échangeur de chaleur (3) et au moins un fluide de travail ;
- au moins un accumulateur de chaleur à stratification (4) ;
- au moins une source de chaleur d'entraînement (11) ; et
- au moins un fluide caloporteur,
dans lequel
aussi bien l'adsorbeur (2) que l'échangeur de chaleur (3) présentent une communication fluidique obturable pour le fluide caloporteur vers l'accumulateur de chaleur à stratification,
le fluide caloporteur présent dans la communication présente une circulation entre l'échangeur de chaleur et l'accumulateur de chaleur à stratification,
le dispositif comprend au moins un circuit de chauffage, comprenant une communication fluidique entre la source de chaleur d'entraînement (11) et l'accumulateur de chaleur à stratification (4) avec au moins une pompe (15) et/ou au moins une vanne de sélection à voies multiples (9) pour la coupure ou la régulation du débit de fluides, dont les raccords sélectionnables sont reliés fluidiquement à différentes positions/hauteurs dans l'accumulateur de chaleur à stratification (4),
**caractérisé en ce qu'**il comprend au moins un circuit d'évaporateur/condenseur, comprenant le module d'adsorption avec seulement un échangeur de chaleur (3) faisant office d'évaporateur et de condenseur et comprenant une communication fluidique de l'échangeur de chaleur (3) à l'accumulateur de chaleur à stratification (4) avec au moins une pompe (17) et au moins une (8a), de préférence au moins deux vannes de sélection à voies multiples (8a et 8b) pour la coupure ou la régulation du débit de fluides,
en outre, une communication fluidique vers une source de chaleur à basse température (13) existe dans le circuit d'évaporateur/condenseur, laquelle peut être établie par l'intermédiaire du composant (14),
le dispositif comprend précisément un adsorbeur, et
le dispositif comprend au moins un circuit de puits de chaleur, comprenant une communication fluidique du puits de chaleur à température moyenne (12) à l'accumulateur de chaleur à stratification (4) avec au moins une pompe (18) et/ou au moins une vanne de sélection à voies multiples (10) pour la coupure ou la régulation du débit de fluides, dont les raccords sélectionnables sont reliés fluidiquement à différentes hauteurs dans l'accumulateur de chaleur à stratification (4).

2. Dispositif selon la revendication 1,
**caractérisé en ce qu'**il comprend au moins un circuit d'adsorbeur, présentant une communication fluidique de l'adsorbeur (2) à l'accumulateur de chaleur à stratification (4) avec au moins une pompe (16) et au moins une (7a), de préférence deux vannes de sélection à voies multiples (7a et 7b) pour la coupure ou la régulation du débit de fluides.

3. Dispositif selon l'une des revendications précédentes,
**caractérisé en ce que** l'adsorbant est choisi parmi le groupe des adsorbants microporeux, de préférence parmi le groupe des zéolithes, des aluminophosphates (AIPO), des silicoaluminophosphates (SAPO), des gels de silice, des charbons actifs ou des réseaux métallo-organiques (MOF), ou **en ce que** l'adsorbant contient un mélange de ces matériaux ;
**en ce que**, en outre, le fluide de travail est choisi parmi le groupe contenant ou constitué par l'eau, l'ammoniac, le méthanol, l'éthanol.

4. Dispositif selon l'une des revendications précédentes,
**caractérisé en ce que** l'accumulateur de chaleur à stratification (4) comporte au moins 3 couches de fluide caloporteur à des températures différentes.

5. Dispositif selon l'une des revendications précédentes,
**caractérisé en ce que** l'accumulateur de chaleur à stratification (4) comporte au moins un dispositif de déchargement avec au moins 4, de préférence au moins 6 positions (hauteurs) de prélèvement discrètes, qui présente une communication fluidique vers au moins deux desdits circuits.

6. Dispositif selon l'une des revendications précédentes,
**caractérisé en ce que** l'accumulateur de chaleur à stratification (4) comporte au moins un dispositif de déchargement avec prélèvement à hauteur variable et/ou une lance de chargement à stratification (6).

7. Procédé pour fournir de la chaleur et/ou du froid en utilisant un dispositif selon l'une des revendications 1 à 6 pour fournir de la chaleur ou du froid.

8. Procédé selon la revendication 7,
**caractérisé en ce que** l'on obtient une variation de température entre la source à basse température et le puits à température moyenne, qui est plus élevée que celle d'un cycle d'adsorption simple constitué de deux isostères et de deux isobares, en parcourant un cycle dans lequel, dans au moins une étape de processus, la chaleur d'adsorption et/ou la chaleur de condensation, libérée à une température inférieure au puits à température moyenne, est stockée temporairement dans l'accumulateur de chaleur à stratification (4) et, dans au moins une étape de processus, l'évaporateur est chauffé avec cette chaleur provenant de l'accumulateur de chaleur à stratification.

9. Procédé pour fournir de la chaleur et/ou du froid selon la revendication 8, **caractérisé en ce que** l'on parcourt un cycle qui présente dans le trajet d'adsorption au moins un point de bifurcation en une étape d'adsorption isobare et en une étape d'adsorption isotherme.

10. Procédé selon la revendication 8,
**caractérisé en ce que** l'on parcourt un cycle qui comprend une bifurcation dans la phase de chauffage de l'adsorbeur, et que l'on obtient un étagement du fait que la chaleur de condensation d'un cycle partiel est stockée temporairement dans l'accumulateur de chaleur à stratification (4) et est utilisée pour la désorption dans un autre cycle partiel.
